# EUROPÄISCHE PATENTSCHRIFT

(11) **EP 2 444 825 B1**
(45) Veröffentlichungstag und Bekanntmachung des Hinweises auf die Patenterteilung: **13.11.2019**
(21) Anmeldenummer: 11180145.2
(22) Anmeldetag: 06.09.2011
(51) Int. Cl.: G01V 8/20

(54) **Lichtvorhang**
Light curtain
Rideau lumineux

(30) Priorität: 19.10.2010 DE 102010048941
(43) Veröffentlichungstag der Anmeldung: 25.04.2012
(73) Patentinhaber: Leuze electronic GmbH + Co. KG, 73277 Owen/Teck (DE)
(72) Erfinder: Hartl, Paul, 80797 München (DE); Olbrich, Sebastian, 80992 München (DE)
(74) Vertreter: Ruckh, Rainer Gerhard

(56) Entgegenhaltungen:
- DE-U1-202008 014 137
- US-A- 4 420 685
- US-A1- 2007 069 114

## Beschreibung

Die Erfindung betrifft einen Lichtvorhang gemäß dem Oberbegriff des Anspruchs 1.

Ein derartiger Lichtvorhang ist beispielsweise aus der DE 10 2008 050 943 A1 vorbekannt. Der Lichtvorhang dient zur Überwachung von Objekten in einem Überwachungsbereich. Insbesondere ist der Lichtvorhang als Sicherheits-Lichtvorhang ausgebildet, der im Bereich der Sicherheitstechnik zur Überwachung von Gefahrenbereichen eingesetzt wird. Der Lichtvorhang umfasst eine Anordnung von Sendern die im Gehäuse einer Sendereinheit untergebracht sind. Weiterhin ist eine Anordnung von Empfängern vorgesehen, die in einem Gehäuse einer Empfängereinheit untergebracht sind. Die Sender- und Empfängereinheiten sind an gegenüberliegenden Rändern des Überwachungsbereichs angeordnet. Bei freiem Überwachungsbereich sind die von einem Sender emittierten Lichtstrahlen auf einen zugeordneten Empfänger geführt. Der Sender und der zugeordnete Empfänger bilden eine Strahlachse. Zur Objektdetektion werden in der Auswerteinheit die Empfangssignale der Empfänger ausgewertet und in Abhängigkeit hiervon als Objektfeststellungssignal ein binäres Schaltsignal generiert, dessen Schaltzustände angeben, ob sich ein Objekt im Überwachungsbereich befindet oder nicht. Ein Objekteingriff liegt vor, wenn wenigstens eine Strahlachse durch ein Objekt unterbrochen ist.

Der Betrieb des Lichtvorhangs erfolgt derart, dass die Strahlachsen, das heißt die Sender und Empfänger der einzelnen Strahlachsen, zyklisch einzeln nacheinander aktiviert werden. Bei dem in der DE 10 2008 050 943 A1 beschriebenen Lichtvorhang werden die einzelnen Sender über Schieberegister einzeln aktiviert. Ebenso werden die Empfänger über Schieberegister einzeln aktiviert. Die Synchronisierung der Sender- und Empfängeraktivierung erfolgt auf optischem Weg. Hierzu werden die Lichtstrahlen einer ausgewählten Strahlachse verwendet.

Nachteilig bei derartigen Lichtvorhängen sind die relativ hohen Kosten des Lichtvorhangs pro Strahlachse. Diese hohen Kosten beruhen auf der relativ großen Anzahl von Bauteilen pro Strahlachse, die zur Ansteuerung eines Senders beziehungsweise eines Empfängers einer Strahlachse benötigt werden.

Bei bekannten Lichtvorhängen sind zur Ansteuerung der Sender Treiberschaltungen, die mit ASICSs oder diskreten Bauelementen realisiert sind, erforderlich, wobei diese Treiberschaltungen stets Bauteile zur Stromeinstellung für die Sender mit entsprechenden strombegrenzenden Widerständen aufweisen. Eine solche zentrale Sendeleistungseinstellung ist dadurch äußerst aufwändig.

Weiterhin werden bei bekannten Lichtvorhängen zur Ansteuerung der Empfänger, Steuerschaltungen mit integrierten Bauteilen wie ASICs oder diskrete Bauteile sowie Bauelemente für die Vorverstärkung oder Impedanzwandlung der Empfangssignale benötigt, und zwar jeweils einzeln für jede Strahlachse des Lichtvorhangs.

Die DE 20 2008 014 137 U1 betrifft einen Lichtvorhang zur Erfassung von Objekten in einem Überwachungsbereich mit einer eine Anzahl von Lichtstrahlen emittierenden Sendern aufweisenden Sendereinheit und mit einer eine Anzahl von Lichtstrahlen empfangenden Empfängern aufweisenden Empfängereinheit, wobei jeweils ein Sender und ein Empfänger eine Strahlachse derart bilden, dass bei freiem Überwachungsbereich die Lichtstrahlen des Senders einer Strahlachse auf den Empfänger der jeweiligen Strahlachse geführt sind. Die Empfängereinheit (5) weist einen Synchrondemodulator (14) auf, auf welchen die Empfangssignale der Empfänger (6) geführt sind. Die Ausgangssignale des Synchrondemodulators (14) sind einer Auswerteeinheit (15) zur Generierung eines Objektfeststellungssignals zugeführt.

Die US 4 420 685 A betrifft eine Fehlerdetektionseinrichtung für eine Maschine. Die Einrichtung umfasst mehrere optische Sensoren. Die Ausgangssignale der optischen Sensoren werden in einem gemeinsamen Verstärker verstärkt.

Die US 2007/0069114 A1 (D3) betrifft eine Mehranordnung von Lichtgittern, die jeweils eine Sendereinheit und eine Empfängereinheit aufweist. Die Sendereinheiten sind über erste Leitungen verbunden und bilden eine Senderkaskade. Die Empfängereinheiten sind über zweite Leitungen verbunden und bilden eine Empfängerkaskade.

Der Erfindung liegt die Aufgabe zugrunde, einen Lichtvorhang der eingangs genannten Art bereitzustellen, welcher bei möglichst einfachem konstruktivem Aufbau eine hohe Funktionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Lichtvorhang dient zur Detektion in einem Überwachungsbereich und umfasst eine Anordnung von Strahlachsen bildenden Sendern und Empfängern. Die Sender und Empfänger der Strahlachsen sind einzeln oder zu mehreren nacheinander aktivierbar. Die Lichtstrahlen des Senders einer Strahlachse sind bei freiem Überwachungsbereich auf den Empfänger dieser Strahlachse geführt. Mit einer Auswerteeinheit wird in Abhängigkeit der Empfangssignale an den Ausgängen der Empfänger ein Objektfeststellungssignal generiert. Die Sender bilden wenigstens eine Senderkaskade. Die Sender sind mittels einer ersten Ansteuerschaltung ohne strombegrenzenden Widerstand in deren Strompfad direkt einzeln oder zu mehreren aktivierbar. Der Sendestrom wird zentral vorgegeben und ist für die einzelnen Sender individuell anpassbar. Die Empfänger bilden wenigstens eine Empfängerkaskade. Die Empfänger sind mittels einer zweiten Ansteuerschaltung einzeln oder zu mehreren aktivierbar. Die Empfangssignale werden ohne einzelne Vorverstärkung, Analogschalter und/oder Impedanzwandler pro Empfänger einem gemeinsamen Gruppenverstärker zugeführt. Jeder Empfänger ist von einer Empfangsdiode oder einem Empfangstransistor gebildet. Die Empfangssignale der oder des Empfangstransistors sind über eine Entkoppeldiode auf eine Signalleitung, die eine Sammelleitung bildet und über diese zum Gruppenverstärker geführt.

Der Begriff Lichtvorhang schließt dabei generell auch Lichtgitter, die eine geringere Anzahl von Strahlachsen aufweisen, mit ein.

Sowohl die Empfängerkaskade als auch die Senderkaskade des erfindungsgemäßen Lichtvorhangs wird mit einer geringen Bauteilanzahl pro Strahlachse realisiert, so dass der Lichtvorhang kostengünstig herstellbar ist.

Dies gilt insbesondere auch für den Fall, dass der erfindungsgemäße Lichtvorhang als Sicherheits-Lichtvorhang, der im Bereich der Sicherheitstechnik, insbesondere im Bereich des Personenschutzes eingesetzt wird. Auch in diesem Fall ist nur eine geringe Bauteilanzahl pro Strahlachse erforderlich. Besonders vorteilhaft ist dabei, dass trotzt dieses geringen konstruktiven Aufwands Mittel zur Fehlerkerkennung in der Empfängerkaskade beziehungsweise Senderkaskade in Verbindung mit der jeweiligen Steuer- bzw. Auswerteeinheit vorgesehen sind, mittels derer die sicherheitstechnischen Anforderungen der geltenden Produktnormen für den Einsatz des Lichtvorhangs im Bereich der Sicherheitstechnik erfüllt werden können.

Bei der Ausbildung der erfindungsgemäßen Empfängerkaskade ist insbesonders vorteilhaft, dass für die Empfänger der einzelnen Strahlachsen keine einzelnen Vorverstärker, Impedanzwandler, Analogschalter und dergleichen, weder diskret aufgebaut noch integriert, vorgesehen sein müssen. Vielmehr werden die Empfangssignale einem zentralen Gruppenverstärker der Empfängerkaskade zugeführt, wodurch der konstruktive Aufwand der Empfängerkaskade sehr gering gehalten werden kann.

Besonders vorteilhaft weist die zweite Ansteuerschaltung zur Aktivierung der Empfänger ein Schieberegister oder eine Anordnung von Diodenauswahlschaltern auf, wobei jedem Empfänger ein Diodenauswahlschalter zugeordnet ist. Jeder Empfänger ist von einer Empfangsdiode gebildet. Anstelle einer Empfangsdiode kann auch ein Empfangstransistor vorgesehen sein. Die Empfangssignale der Empfangsdiode sind über die Entkoppeldiode auf eine Signalleitung und über diese zum Gruppenverstärker geführt. Anstelle einer Entkoppeldiode kann ein kapazitätsarmer Transistor, insbesondere ein hochfrequenter Feldeffekttransistor vorgesehen sein. Eine nicht aktivierte Empfangsdiode ist mittels eines Ableitwiderstands und einer Hilfsspannung in den Elementbetrieb geschaltet. Die Hilfsspannung ist so gewählt, dass durch Auftreffen von Lichtstrahlen generierte Ströme in der Empfängsdiode über den Ableitwiderstand abgeleitet werden und nicht zum Gruppenverstärker gelangen. Da eine Empfangsdiode im Elementbetrieb wesentlich träger ist als im Sperrbereich, gelangen dadurch die schnellen Nutzsignale, die von den Lichtimpulsen des jeweiligen Senders stammen, nicht über die Verstärkerstufe, das heißt den Gruppenverstärker und letztlich nicht zur Auswerteeinheit. Eine aktivierte Empfangsdiode ist im Sperrbetrieb betrieben. Durch Auftreffen von Lichtstrahlen werden generierte Ströme in der Empfangsdiode im Gruppenverstärker registriert.

Wesentlich ist ein Vorspannen der Entkoppeldioden mit der Hilfsspannung. Dadurch wird eine erhöhte Empfangsempfindlichkeit der Empfänger erhalten. Durch die Vorspannung fließt ein Strom vom Gruppenverstärkereingang über die Entkoppeldiode und den Ableitwiderstand zur Hilfsspannung. Dieser Strom muss dann nicht mehr von der Empfangsdiode erbracht werden. Dadurch ergibt sich zwangsläufig eine höhere Empfangsempfindlichkeit der Schaltung und damit eine größere Reichweite für den gesamten Lichtvorhang.

Die so ausgebildete Empfängerschaltung für eine Strahlachse erfordert einen besonders geringen konstruktiven Aufwand. Besonders vorteilhaft hierbei ist, dass die Auswahl, das heißt die selektive Aktivierung eines Empfängers der Empfangerkaskade, rein digital erfolgen kann, wobei diese Auswahl durch eine Zuschaltung definierter Spannungspegel erfolgt, die insbesondere durch die Hilfsspannung definiert sind. Teure Analogschaltungen zur Auswahl einzelner Empfänger entfallen somit.

Die Signalleitung, mit welcher die einzelnen Empfänger an den Gruppenverstärker der Empfängerkaskade angekoppelt sind, ist bevorzugt als Leitung mit kontrollierter Impedanz ausgebildet. Besonders vorteilhaft ist die Signalleitung als niederohmig und kapazitätsarme Mirkrostripleitung ausgebildet. Durch diese Ausbildung der Signalleitung werden durch Rückreflektionen bedingte Echos vermieden. Zudem ist durch eine Schirmung gewährleistet, dass keine äußeren Störungen die Signalübertragung auf der Signalleitung verfälschen, so dass gewährleistet ist, dass die Empfangssignale der Empfänger fehlerfrei über die Signalleitung dem Gruppenverstärker zugeführt werden.

Vorteilhaft ist durch Überprüfung der Arbeitspunkte der Sendelichtstrahlen und/oder einer Strommessung auf den Sendelichtstrahlen und/oder der Auswertung der Arbeitspunkte z. B auf der Signalleitung und/oder der Signalverläufe im Gruppenverstärker eine Fehlerüberwachung realisiert.

Damit wird bei einem als Sicherheits-Lichtvorhang ausgebildeten Lichtvorhang die erforderliche Fehlersicherheit der Empfängerkaskade und Senderkaskade nach den geltenden Sicherheitsnormen erfüllt.

Der Aufbau des Sicherheits-Lichtvorhangs ist dabei generell derart, dass die emptangsseitig vorgesehene Auswerteeinheit zur Generierung eines Objektsfeststellungssignals einen redundanten, fehlersicheren Aufbau aufweist, bevorzugt in Form zweier sich zyklisch gegenseitig überwachender Rechnereinheiten. Die Auswerteeinheit übernimmt damit die zentrale Funktion der Fehlerkontrollen für den Lichtvorhang und bildet insbesondere auch die zentrale Auswertung für die Fehlerkontrollen der Empfängerkaskaden, sowie der Senderkaskaden.

Gemäß einer vorteilhaften Weiterbildung der Erfindung weist der Lichtvorhang eine Mehrfachanordnung von Empfängerkaskaden auf, die über eine kaskadenmodulübergreifende Signalleitung miteinander verbunden sind. Damit wird ein modularer Aufbau erhalten, der eine rationelle und kostengünstige Herstellung des Lichtvorhangs ermöglicht. Insbesondere wird durch die kaskadenmodulübergreifende Signalleitung mit geringem Aufwand eine Kopplung der Empfängerkaskade ermöglicht.

Besonders vorteilhaft ist durch Auswertung von Signalverläufen auf der kaskadenmodulübergreifenden Signalleitung bei mehreren Empfängerkaskaden oder der Signalleitung bei einer Empfängerkaskade die Gesamtzahl von Empfangsdioden und/oder die Auflösung des Lichtvorhangs bestimmbar und/oder eine Fehlerkontrolle von Entkoppeldioden der Empfängerkaskaden durchführbar. Insbesondere der digitale Bereich der Empfängerschaltung wie Schieberegister, Diodenauswahlschalter und Empfängerkaskadenübergänge lassen sich bevorzugt überwachen.

Über die kaskadenmodulübergreifende Signalleitung ist eine umfangreiche Prüfung der Empfängerkaskaden möglich, wobei die Prüfung nicht nur eine Fehlerkontrolle zur Erfüllung der Sicherheitsanforderungen für den Einsatz des Lichtvorhangs im Bereich der Sicherheitstechnik umfasst. Vielmehr kann über die kaskadenmodulübergreifende Signalleitung auch die aktuelle Konfiguration des Lichtvorhangs selbststätig erkannt und geprüft werden, wie z. B. das Erkennen von Sensoren und/oder Aktuatoren, die mit dem Lichtvorhang ein gesamtes Schutzsystem bilden.

Die Ausbildung der Senderkaskaden des erfindungsgemäßen Lichtvorhangs entspricht der Ausbildung der Empfängerkaskaden dahingehend, dass zur Auswahl, das heißt einzelnen Aktivierung von Sendern, Schieberegister oder Diodenauswahlschalter eingesetzt werden, so dass auch die Sender direkt, auf digitalem Weg auswählbar sind. Es ist generell auch möglich mehrere Sender zu einer Gruppe zusammen zu fassen und gleichzeitig Licht emittieren zu lassen. Das reduziert die Auflösung und erhöht die Reichweite des Lichtvorhangs.

Ein weiterer wesentlicher Vorteil der erfindungsgemäßen Senderkaskade besteht darin, dass der Sendestrom für die einzelnen als Sendediode ausgebildeten Sender über eine einzige zentrale Steuerleitung vorgegeben wird, wobei dennoch eine individuelle Anpassung der Sendeströme bzw. Sendeleistungen der Sendedioden möglich ist. Mit der Anpassung kann insbesondere eine Temperaturkompensation für die Sendediode realisiert werden. Dies wird vorteilhaft dadurch erreicht, dass als Bestandteil der Ansteuerschaltung jedem Diodenauswahlschalter ein Transistor oder allgemein ein Stellglied zugeordnet ist Die Sendediode ist ohne weiteres strombegrenzendes Bauteil in deren Strompfad im Source-/ Emitter Kreis des Transistors angeordnet. Der Sendestrom der Sendediode ist über die Gate- bzw. Basisspannung des Transistors einstellbar. Weiterhin ergibt sich durch die Kennlinien der Sendedioden und des Transistors bereits eine thermische Grundkompensation. Weiterhin können für Test- und Prüfzwecke höhere Sendeleistungen individuel realisiert werden.

Besonders vorteilhaft wird durch eine Strommessung des den Sendedioden sequentiell zugeführten Stroms / Energie eine Fehlerkontrolle der Sendedioden durchführbar.

Damit können auf einfache Weise Fehler im Sendebetrieb des Lichtvorhangs aufgedeckt werden.

Vorteilhaft werden die Ergebnisse der Fehlerkontrolle der Sendedioden mittels der Lichtstrahlen an die Empfänger übertragen und von der Auswerteeinheit ausgewertet. Auch die Steuereinheit zur Steuerung der Sender registriert derartige Fehler. Auf gleiche Art werden darüber hinaus Senderkaskadenfehler mit der Strommessung in der Steuereinheit aufgedeckt und bei einem Fehler der sichere Zustand des Lichtvorhangs eingeleitet.

Hierbei wird dem Umstand Rechnung getragen, dass bei einem als Sicherheits-Lichtvorhang ausgebildeten Lichtvorhang die empfangsseitige Auswerteeinheit die zentrale Einheit der Fehlerüberwachung bildet. Durch die Übertragung der Ergebnisse der Fehlerkontrolle von den Sendern zu den Empfängern kann somit die Auswertung eventueller Fehler in der Senderanordnung und deren Ansteuerung mit der Auswerteeinheit durchgeführt werden.

In einer vorteilhaften Ausgestaltung können, analog zu der Mehrfachanordnung von Empfängerkaskaden, auch mehrere Senderkaskaden miteinander gekoppelt sein, so dass sich auch senderseitig ein modularer Aufbau bestehend aus mehreren Kaskaden ergibt.

Die Erfindung wird im Folgenden anhand der Zeichnungen erläutert. Es zeigen;
- Figur 1:: Schematische Darstellung eines Lichtvorhangs.
- Figur 2:: Schaltbild einer Empfängerkaskade für den Lichtvorhang gemäß Figur 1.
- Figur 3:: Schaltbild mehrerer gekoppelter Empfängerkaskaden für den Lichtvorhang gemäß Figur 1.
- Figur 4:: Schaltbild einer Senderkaskade für den Lichtvorhang gemäß Figur 1.
- Figur 5:: Schaltbild für die Stromeinspeisung in die Senderkaskade gemäß Figur 4.

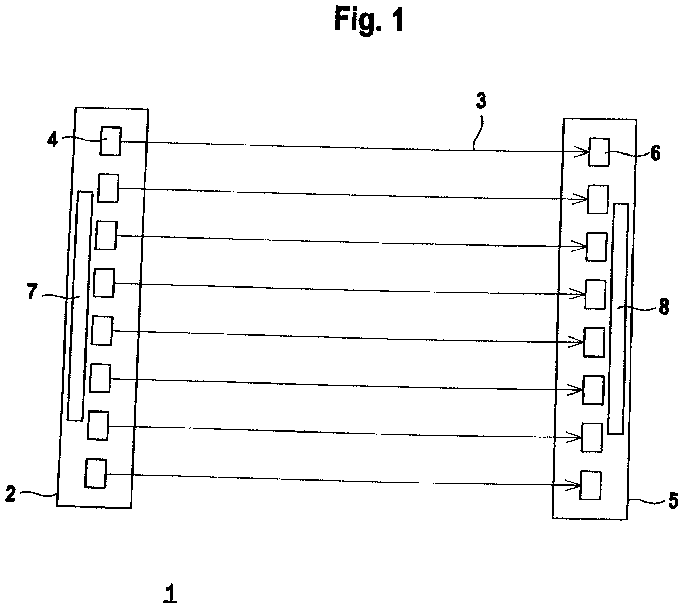

Figur 1 zeigt den prinzipiellen Aufbau eines Lichtvorhangs 1 als Ausführungsbeispiel eines optischen Sensors. Der Lichtvorhang 1 umfasst eine Sendereinheit 2, in deren Gehäuse eine Reihenanordnung von Lichtstrahlen 3 emittierenden Sendern in Form von Sendedioden 4 angeordnet ist. Die Sendedioden 4 sind von Leuchtdioden oder dergleichen gebildet. Der Lichtvorhang 1 weist weiterhin eine Empfängereinheit 5 auf, in deren Gehäuse eine Reihenanordnung von Lichtstrahlen 3 empfangenden Empfängern in Form von Empfangsdioden 6 vorgesehen ist. Die Empfangsdioden 6 sind von Foto-PIN-Dioden oder Foto-Dioden gebildet. Alternativ könne auch Foto-Transistoren eingesetzt werden.

Die Sendereinheit 2 und die Empfängereinheit 5 sind an gegenüberliegenden Rändern eines zu überwachenden Bereichs angeordnet. Bei freiem zu. überwachendem Bereich treffen die von jeweils einer Sendediode 4 emittierten Lichtstrahlen 3 auf eine zugeordnete, gegenüberliegende Empfangsdiode 6. Eine Sendediode 4 und die hierzu zugeordnete Empfangsdiode 6 bilden jeweils eine Strahlachse. Der Senderbetrieb wird durch eine Steuereinheit 7 in der Sendereinheit 2 gesteuert und bewertet. Der Empfängerbetrieb wird durch eine Auswerteeinheit 8 in der Empfängereinheit 5 gesteuert und bewertet. Die Sendedioden 4 und Empfangsdioden 6 der einzelnen Strahlachsen werden durch eine optische Synchronisierung des Lichtvorhangs 1 zyklisch einzeln oder zu mehreren nacheinander aktiviert. Mit den parallel, verlaufenden Lichtstrahlen 3 der Strahlachsen wird ein in einer Ebene verlaufendes Schutzfeld überwacht.

In der Auswerteeinheit 8 werden hierzu die Empfangssignale der Empfangsdioden 6 ausgewertet, um als Objektfeststellungssignal ein binäres Schaltsignal zu erzeugen. Der erste Schaltzustand entspricht einer Objektmeldung, der zweite Schaltzustand einem freien Schutzfeld.

Der Lichtvorhang 1 bildet einen Sicherheitssensor für den Einsatz im Bereich der Sicherheitstechnik. Hierzu weist der Lichtvorhang 1 einen fehlersicheren Aufbau auf Insbesondere weist die Auswerteeinheit 8 einen mehrkanaligen, redundanten Aufbau auf, beispielsweise in Form zweier sich zyklisch überwachender Rechnereinheiten.

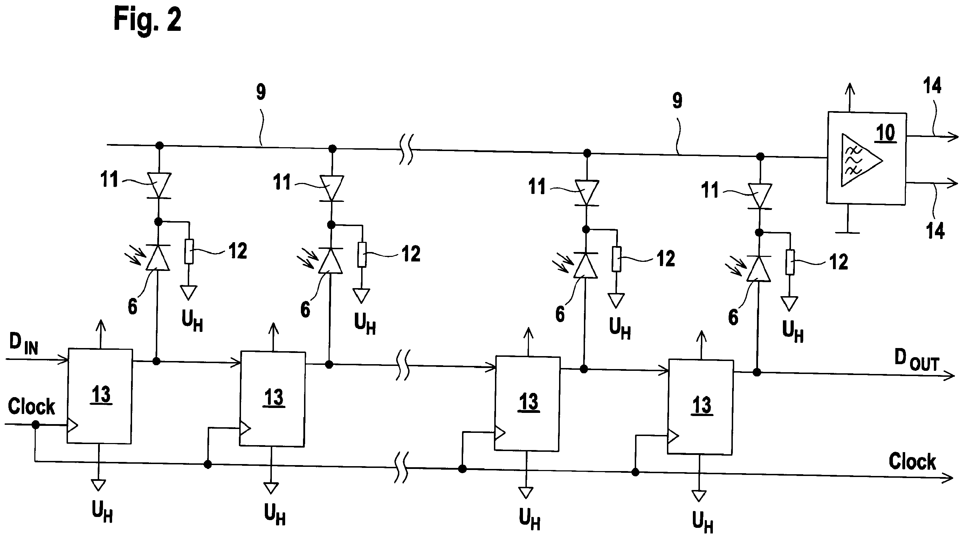

Figur 2 zeigt ein Ausführungsbeispiel, bei welchem die Empfangsdioden 6 des Lichtvorhangs 1 eine einzige Empfängerkaskade bilden. Die Empfängerkaskade wird dadurch gebildet, dass die Empfangssignale aller Empfangsdioden 6 ohne eigene Vorverstärkung über eine Signalleitung 9 einem gemeinsamen Gruppenverstärker 10 zugeführt werden.

Die Signalleitung 9 ist im vorliegenden Fall von einer Mikrostripleitung, das heißt einer Leiterbahn mit kontrollierter Impedanz gebildet, die niederohmig, geschirmt und/oder kapazitätsarm ausgeführt ist, um Störungen auf der Signalleitung 9 zu vermeiden.

Jede Empfangsdiode 6 ist mit einer Entkoppeldiode 11 in Reihe geschaltet. Anstelle einer Entkoppeldiode 11 kann auch ein entsprechendes Bauelement wie ein Entkoppel-Transistor eingesetzt werden. Weiterhin eignen sich als Entkoppelbauelemente auch Analogschalter, Feldeffekttransistoren und PIN-Dioden. Zwischen jeder Empfangsdiode 6 und Entkoppeldiode 11 zweigt eine Leitung zu einem Ableitwiderstand 12 ab, der auf dem Potential einer Hilfsspannung U_{H} liegt.

Als Bestandteil einer Ansteuerschaltung, mit welcher die einzelnen Empfangsdioden 6 der Empfängerkaskaden zyklisch einzeln oder zu mehreren nacheinander aktiviert werden, ist eine Anordnung von Diodenauswahlschaltern vorgesehen, die im vorliegenden Fall von einer Anordnung von Flip-Flops 13 gebildet sind. Dabei ist jeder Empfangsdiode 6 ein Flip-Flop 13 zugeordnet. Anstelle von Flip-Flops 13 können auch Schieberegister oder dergleichen vorgesehen sein.

Die Ansteuerung der Diodenauswahlschalter-Anordnung erfolgt über zwei Steuerleitungen D_{IN}, Clock, welche von einer Rechnereinheit, bevorzugt den Rechnereinheiten der Auswerteinheit 8, gesteuert werden. Mit diesen Steuerleitungen D_{IN}, Clock erfolgt die jeweilige Strahlauswahl, das heißt die selektive Aktivierung eines Empfängers oder mehrerer Empfänger, wobei hierzu an die Steuerleitung DIN ein bestimmtes Bit angelegt wird, dass mittels der Steuerleitung Clock sequentiell an die einzelnen Flip-Flops 13 durchgeschoben wird, um damit die den jeweiligen Flip-Flops 13 zugeordneten Empfangsdioden 6 zu aktivieren.

Eine oder jede aktivierte Empfangsdiode 6 wird im Sperrbetrieb betrieben. Der Pegel Hilfssannung U_{H} ist so gewählt, dass die Empfangsdiode 6 bzw. die Entkoppeldiode 11 über den hochohmigen Ableitwiderstand 12 angekoppelt sind und damit die Entkoppeldiode 11 in Durchlassrichtung bereits vorgespannt ist, was zu einer höheren Empfangsempfindlichkeit führt. Treffen auf die Empfangsdioden 6 Lichtstrahlen 3 auf, so fließt dadurch ein Signalstrom von der Empfangsdiode 6 in das Flip-Flop 13, wobei dieser über die Entkoppeldiode 11 der Signalleitung 9 zugeführt und dies im Gruppenverstärker 10 registriert wird, das heißt im Gruppenverstärker 10 wird ein durch die Lichtstrahlen 3 bewirktes Empfangssignal an dieser aktiven Empfangsdiode 6 oder mehreren Empfangsdioden 6 registriert. Dies wird dadurch erreicht, dass am Ausgang des Flip-Flops 13 ein geeigneter Spannungspegel anliegt.

Eine Deaktivierung einer Empfangsdiode 6 wird dadurch erhalten, dass am Ausgang des zugeordneten Flip-Flops 13 ein gegenüber dem Fall einer Aktivierung geänderter Spannungspegel anliegt, der so gewählt ist, dass die Empfangsdiode 6 über den Ableitwiderstand 12 und die Hilfsspannung UH in den Elementbetrieb geschaltet ist. Treffen nun Lichtstrahlen 3 auf eine so deaktivierte Empfängsdiode 6, so fließt der dadurch entstehende Strom vollständig über den Ableitwiderstand 12 ab, das heißt auf der Signalleitung 9 wird von der deaktivierten Empfangsdiode 6 keinerlei Signaländerung registriert. Mit anderen Worten bedeutet dies: Da eine im Elementbetrieb geschaltete Empfangsdi-ode 6 wesentlich langsamer ist als im Sperrbetrieb, können die schnellen Nutzlichtimpulse nicht über den Gruppenverstärker geleitet und so nicht weiter verstärkt werden bzw. nicht von der Auswerteeinheit 8 registriert werden.

Damit kann allein über die Diodenauswahlschalter-Anordnung der Flip-Flops 13 durch Vorgabe bestimmter Spannungspegel unter Ausnutzung der verschiedenen Betriebsmodi der Empfangsdiode 6 eine Einzel-Aktivierung oder Mehrfach-Aktivierung der Empfangsdioden 6 durchgeführt werden.

Da die Empfangsdioden 6 einzeln nacheinander aktiviert sind, gelangen deren Empfangssignale über die Signalleitungen 9 zeitlich nacheinander in den Gruppenverstärker 10 und von dort in die Auswerteinheit 8, wo sie zur Generierung des Objektfeststellungssignals ausgewertet werden.

Eine Fehlerkontrolle kann dabei derart erfolgen, dass der vorzugsweise fest vorgegebene Arbeitspunkt, das heißt Spannungspegel auf der Signalleitung 9, überprüft wird. Weiter kann eine Fehlerkontrolle dadurch durchgeführt werden, dass die einzelnen Signalströme gemessen werden beziehungsweise die im Gruppenverstärker 10 erhaltenen Signalverläufe registriert und geprüft werden. Die Auswertung erfolgt vorzugsweise in der Auswerteeinheit 8.

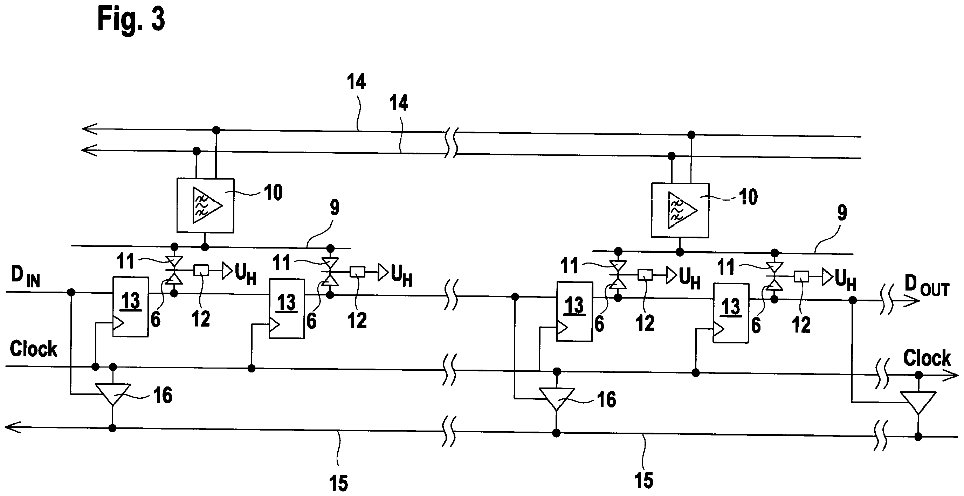

Figur 3 zeigt eine Ausführungsform, bei welcher der Lichtvorhang 1 mehrere miteinander gekoppelte Empfängerkaskaden aufweist. Die Anordnung gemäß Figur 3 umfasst zwei Empfängerkaskaden, deren Aufbau der Empfängerkaskade gemäß Figur 2 entspricht. Die Empfängerkaskaden sind ausgangsseitig so gekoppelt, dass die Ausgangssignale der beiden Gruppenverstärker 10 der Empfängerkaskaden auf eine oder zwei gemeinsame Ausgangsleitungen 14 als Differenzstromschnittstelle geführt sind.

Die selektive Einzelaktivierung oder Mehrfachaktivierung erfolgt analog zu der Ausführungsform gemäß Figur 2 über Steuerleitungen D_{IN}, Clock. Zudem ist bei der Ausführungsform gemäß Figur 3 eine kaskadenmodulübergreifende Signalleitung 15 vorgesehen, die die beiden Empfängerkaskaden miteinander koppelt. Diese kaskadenmodulübergreifende Signalleitung 15 ist über einzelne Torschaltungen 16 für die Empfängerkaskade mit den Steuerleitungen Dᵢₙ, Clock verbunden.

Mit der kaskadenmodulübergreifenden Signalleitung 15 wird die korrekte Arbeitsweise der Empfängerkaskade geprüft und überwacht Durch eine individuelle Vorgabe von Kodierungen für die einzelnen Empfangsdioden, die den Signalen, die über die Steuerleitungen Dᵢₙ Clock übertragen werden, aufgeprägt sind, kann mit der kaskadenmodulübergreifenden Signalleitung 15 eine Identifikation der angeschlossenen Empfangsdiode 6 vorgenommen werden, insbesondere auch die Gesamtzahl aller Empfangsdioden 6 erfasst und geprüft werden. Weiterhin kann durch Erfassen der Kodierungen auch die Auflösung des Lichtvorhangs 1, das heißt der Abstand zwischen zwei Empfangsdioden 6, ermittelt werden.

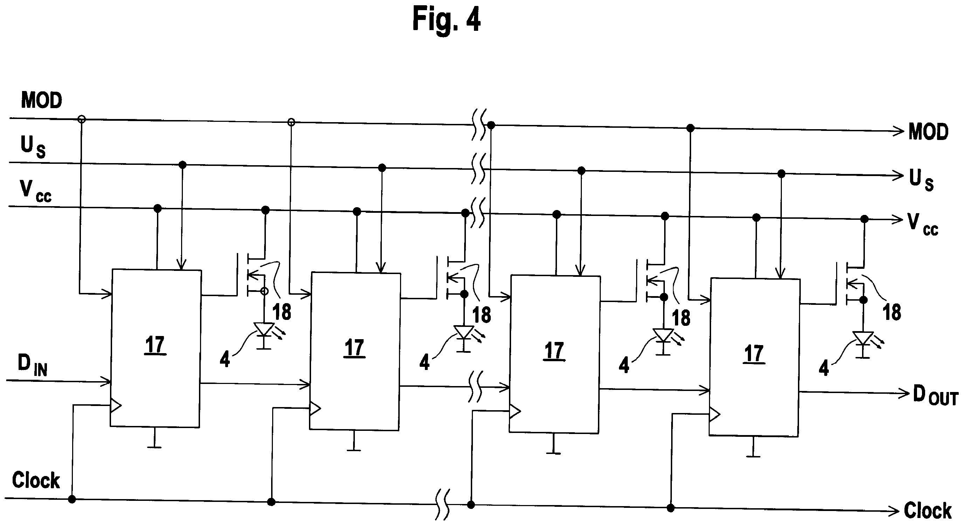

Figur 4 zeigt ein Ausführungsbeispiel einer Anordnung von Sendedioden 4 des Lichtvorhangs 1 gemäß Figur 1, wobei diese Anordnung eine Senderkaskade bildet. Als Bestandteil der Steuereinheit 7 zur einzelnen oder mehrfachen Aktivierung der Sender ist analog zur empfangsseitigen Ansteuerschaltung gemäß Figur 2 auch in diesem Fall eine Ansteuerschaltung mit einer Anordnung von Diodenauswahlschaltern vorgesehen, wobei als Diodenauswahlschalter in diesem Fall Multiplexer 17 vorgesehen sind. Dabei ist jeweils ein Multiplexer 17 einer Sendediode 4 zugeordnet. Anstelle von Multiplexern 17 können Schieberegister oder Flip-Flops 13 als Diodenauswahlschalter vorgesehen sein.

Auf die Multiplexer 17 sind Steuerleitungen D_{IN}, Clock geführt. Mit der Steuerleitung Clock erfolgt die jeweilige Strahlauswahl, das heißt die selektive Aktivierung eines Senders oder mehrerer Sender. Mit der Steuerleitung MOD wird eine spezifische Kodierung der von der jeweiligen Sendediode 4 ermittierten Lichtstrahlen 3 vorgegeben. Mit einer weiteren Steuerleitung U_{S} wird die Empfindlichkeit, das heißt die Sendeleistung einzelner Sender, vorgegeben. Mit der Steuerleitung V_{cc} erfolgt die Spannungsversorgung der Senderkaskaden.

Wie aus Figur 4 ersichtlich, ist jeder Sendediode 4 ein Stellglied in Form eines Transistors 18 zugeordnet, der an den jeweiligen Multiplexer 17 angeschlossen ist. Desweiteren ist in den Strompfaden der Sendediode 4 kein weiteres Bauteil, wie z. B. ein strombegrenzender Widerstand, vorgesehen. Die Sendediode 4 ist im Source- /Emitter-Kreis des Transistors 18 angeordnet, so dass der Sendestrom der Sendediode 4 über die Gates-/Basisspannung des Transistors 18 einstellbar ist. Mit dieser Anordnung können Leistungsschwankungen einfach und schnell kompensiert werden. Auch können spezifische Senderleistungen zu Testzwecken aufgeprägt werden.

Bei der Senderkaskade gemäß Figur 4 werden die Sendeströme der Senderdioden 4 zentral über die Steuerleitungen D_{IN}, U_{S}, V_{CC}, MOD vorgegeben, wobei über die Steuerleitung Clock eine Strahlauswahl derart erfolgt, dass die Sender zyklisch einzeln oder zu mehreren nacheinander aktiv werden. Der Steuerleitung Us obliegt die Vorgabe der individuellen Senderströme und damit der Senderleistungseinstellungen von zentraler Stelle aus, vorzugsweise von der Steuereinheit 7.

Weiterhin kann von einer zentralen Stelle aus durch eine integrierende Strommessung des Strombedarfs und damit des Energiebedarfs der einzelnen Sendedioden 4 eine Fehlerkontrolle durchgeführt werden.

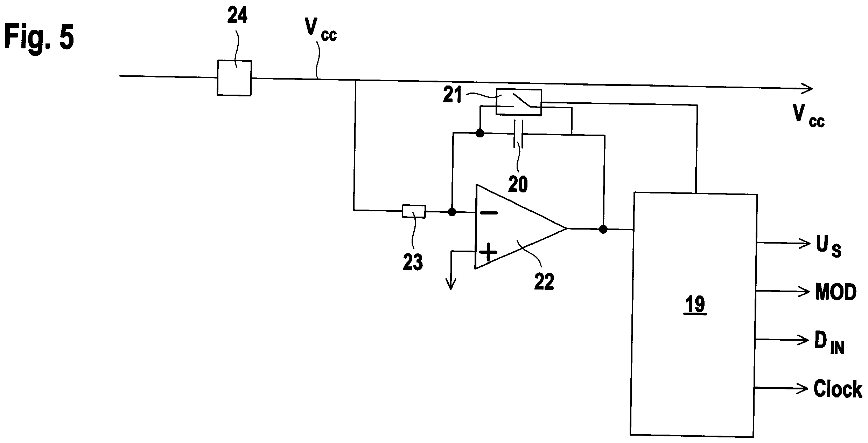

Eine entsprechende Schaltungsanordnung, die Bestandteil der Steuereinheit 7 ist, ist in Figur 5 dargestellt. Die Schaltung umfasst als Mittel zur Steuerung und Auswertung einen Controller 19 oder eine sonstige Rechnereinheit. An den Controller 19 sind als integrierende Messschaltung ein parallel zu einem Kondensator 20 geschalteter Schalter 21 sowie ein Integrator 22, der vorzugweise ein Operationsverstärker ist, angeschlossen. Über einen Widerstand 23 wird dem Integrator 22 die Eingangsspannung, resultierend aus dem Spannungsabfall an einem Messwiderstand 24 (shunt) auf der gemeinsamen Stromversorgungsleitung V_{cc} der Senderkaskade, zugeführt. Diese Eingangsspannung ist indirekt der Stromwert auf der gemeinsamen Stromversorgungsleitung Vcc aller Senderkaskaden.

Zur Fehlerkontrolle der Senderkaskade gemäß Figur 4 erfolgt mit der Schaltung gemäß Figur 5 eine gemeinsame, integrierende Strommessung für alle Sendedioden 4 der Senderkaskade. Gemäß einer Erweiterung erfolgt die Strommessung für mehrere modular nacheinander angeordnete Senderkaskaden. Mit dem Integrator 22 erfolgt eine integrierende Strommessung, die durch den von dem Controller 19 gesteuerten Schaltungen zu vorgegebenen Zeiten beendet wird. Der Schalter 21 wird so gesteuert, dass der Integrator 22 den Strombedarf bzw. Energiebedarf für eine vorgegebene Anzahl von Sendedioden 4 aufintegriert. Da die Sendedioden 4 einzeln oder zu mehreren nacheinander angesteuert werden, kann durch eine zeitaufgelöste Auswertung der Signale des Integrators 22 genau erfasst werden, welche Sendediode 4 fehlerfrei arbeitet und welche nicht. Zusätzlich registriert der Controller 19 bzw. die Steuereinheit 7 einen nicht korrekten Betrieb der kompletten Sendereinheit und stoppt den Senderbetrieb.

Die Ergebnisse der Fehleraufdeckung im Controller 19 werden bevorzugt auf optischem Weg über die Lichtstrahlen 3 der Sendedioden 4 an die zugeordneten Empfänger übertragen, so dass dann die Auswertung der Fehleraufdeckung zentral in der Auswerteeinheit 8 des Lichtvorhangs 1 durchgeführt werden kann.

Generell können die Empfängerkaskaden und Senderkaskaden der Figuren 2 bis 5 mit weiteren Peripheriemodulen wie Leuchtmeldern, Muting-Sensoren und dergleichen direkt gekoppelt werden. Die Empfängerkaskaden beziehungsweise Senderkaskaden übernehmen dabei die Funktionen von Ein- und Aüsgabeeinheiten.

### Bezugszeichenliste

- (1): Lichtvorhang
- (2): Sendereinheit
- (3): Lichtstrahlen
- (4): Sendediode
- (5): Empfängereinheit
- (6): Empfangsdiode
- (7): Steuereinheit
- (8): Auswerteeinheit
- (9): Signalleitung
- (10): Gruppenverstärker
- (11): Entkoppeldiode
- (12): Ableitwiderstand
- (13): Flip-Flop
- (14): Ausgangsleitung
- (15): kaskadenmodulübergreifende Signalleitung
- (16): Torschaltung
- (17): Multiplexer
- (18): Transistor
- (19): Controller
- (20): Kondensator
- (21): Schalter
- (22): Integrator
- (23): Widerstand
- (24): Messwiderstand

## Patentansprüche

1. Lichtvorhang zur Detektion von Objekten in einem Überwachungsbereich mit einer Anordnung von Strahlachsen bildenden Sendern und Empfängern, wobei die Sender und Empfänger der Strahlachsen einzeln oder zu mehreren nacheinander aktivierbar sind und die Lichtstrahlen (3) des Senders einer Strahlachse bei freiem Überwachungsbereich auf den Empfänger dieser Strahlachse geführt sind, und mit einer Auswerteeinheit (8), in welcher in Abhängigkeit der Empfangssignale an den Ausgängen der Empfänger ein Objektfeststellungssignal generiert wird, wobei die Sender wenigstens eine Senderkaskade bilden, wobei die Sender mittels einer ersten Ansteuerschaltung ohne strombegrenzenden Widerstand in deren Strompfad direkt einzeln oder zu mehreren aktivierbar sind und dabei der Sendestrom zentral vorgegeben wird und für die einzelnen Sender individuell anpassbar ist, und/oder die Empfänger wenigstens eine Empfängerkaskade bilden, wobei die Empfänger mittels einer zweiten Ansteuerschaltung einzeln oder zu mehreren aktivierbar sind **dadurch gekennzeichnet, dass** die Empfangssignale ohne einzelne aktive Vorverstärkung, Analogschalter und/oder Impedanzwandler pro Empfänger einem gemeinsamen Gruppenverstärker (10) zugeführt werden, wobei jeder Empfänger von einer Empfangsdiode (6) oder einem Empfangstransistor gebildet ist, wobei die Empfangssignale der Empfangsdiode (6) oder des Empfangstransistors über eine Entkoppeldiode (11) oder einen kapazitätsarmen Transistor auf eine Signalleitung (9), die eine Sammelleitung bildet und über diese zum Gruppenverstärker (10) geführt sind.

2. Lichtvorhang nach Anspruch 1, **dadurch gekennzeichnet, dass** die zweite Ansteuerschaltung zur Aktivierung der Empfänger ein Schieberegister oder eine Anordnung von Diodenauswahlschaltern aufweist, wobei jedem Empfänger ein Diodenauswahlschalter zugeordnet ist.

3. Lichtvorhang nach einem der Ansprüche 1 oder 2, **dadurch gekennzeichnet, dass** anstelle kapazitätsarme Transistoren, hochfrequente Feldeffekttransistoren, verwendet werden.

4. Lichtvorhang nach einem der Ansprüche 1 bis 3, **dadurch gekennzeichnet, dass** eine nicht aktivierte Empfangsdiode (6) mittels eines Ableitwiderstands (12) und einer Hilfsspannung U_{H} in den Elementbetrieb geschaltet ist, wobei die Hilfsspannung U_{H} so gewählt ist, dass durch Auftreffen von Lichtstrahlen (3) generierte Ströme in der Empfangsdiode (6) über den Ableitwiderstand (12) abgeleitet werden und nicht zum Gruppenverstärker (10) gelangen.

5. Lichtvorhang nach Anspruch 4, **dadurch gekennzeichnet, dass** eine aktivierte Empfangsdiode (6) im Sperrbetrieb betrieben ist, und dass durch Auftreffen von Lichtstrahlen (3) generierte Ströme in der Empfangsdiode (6) ohne Zwischen- oder Vorverstärkung oder Impedanzwandlung im Gruppenverstärker (10) registriert werden.

6. Lichtvorhang nach einem der Ansprüche 4 oder 5, **dadurch gekennzeichnet, dass** jede Entkoppeldiode (11) mit der Hilfsspannung U_{H} vorgespannt ist.

7. Lichtvorhang nach einem der Ansprüche 1 bis 6, **dadurch gekennzeichnet, dass** die Signalleitung (9) eine Leitung mit kontrollierter Impedanz ist.

8. Lichtvorhang nach Anspruch 7, **dadurch gekennzeichnet, dass** durch Überprüfung des Arbeitspunkts der Signalleitung (9) und/oder einer Strommessung auf der Signalleitung (9) und/oder der Auswertung der Signalverläufe im Gruppenverstärker (10) eine Fehlerüberwachung realisiert ist.

9. Lichtvorhang nach einem der Ansprüche 1 bis 8, **dadurch gekennzeichnet, dass** der Gruppenverstärker im mittleren Drittel der Empfängerkaskade angeordnet ist.

10. Lichtvorhang nach einem der Ansprüche 1 bis 9, **dadurch gekennzeichnet, dass** mehrere Empfängerkaskaden miteinander gekoppelt sind.

11. Lichtvorhang nach Anspruch 10, **dadurch gekennzeichnet, dass** die Empfängerkaskaden über eine kaskadenmodulübergreifende Signalleitung (15) verbunden sind.

12. Lichtvorhang nach einem der Ansprüche 1 bis 11, **dadurch gekennzeichnet, dass** durch Auswertung von Signalverläufen auf der kaskadenmodulübergreifenden Signalleitung (15) oder der Signalleitung (9) die Gesamtzahl von Empfangsdioden (6) und/oder die Auflösung des Lichtvorhangs bestimmbar ist und/oder eine Fehlerkontrolle von Empfängerkaskaden durchführbar ist.

13. Lichtvorhang nach einem der Ansprüche 1 bis 12, **dadurch gekennzeichnet, dass** jeder Sender von einer Sendediode (4) gebildet ist, und dass die erste Ansteuerschaltung zur Ansteuerung der Sendediode (4) ein Schieberegister oder eine Anordnung von Diodenauswahlschaltern, aufweist wobei jeder Sendediode (4) ein Diodenauswahlschalter zugeordnet ist.

14. Lichtvorhang nach Anspruch 13, **dadurch gekennzeichnet, dass** als Bestandteil der ersten Ansteuerschaltung jedem Diodenauswahlschalter ein Stellglied, insbesondere ein Transistor (18), zugeordnet ist, wobei die Sendediode (4) ohne weiteres strombegrenzendes Bauteil in deren Strompfad im Source-/ Emitter-Kreis des Stellglieds angeordnet ist, und der Sendestrom der Sendediode (4) über die Gate- bzw. Basisspannung des Stellglieds einstellbar ist.

15. Lichtvorhang nach Anspruch 14, **dadurch gekennzeichnet, dass** durch die Einstellung der Sendeströme eine Kompensation von Temperaturschwankungen der Sendediode (4) durchführbar ist.

16. Lichtvorhang nach einem der Ansprüche 13 bis 15, **dadurch gekennzeichnet, dass** durch eine Strommessung des den Sendedioden (4) sequentiell zugeführten Stroms eine Fehlerkontrolle der Sendedioden (4) durchführbar ist.

17. Lichtvorhang nach Anspruch 16, **dadurch gekennzeichnet, dass** die Ergebnisse der Fehlerkontrolle der Sendedioden (4) mittels der Lichtstrahlen (3) an die Empfänger übertragen werden und von der Auswerteeinheit (8) ausgewertet werden.

18. Lichtvorhang nach einem der Ansprüche 1 bis 17, **dadurch gekennzeichnet, dass** mehrere Senderkaskaden miteinander gekoppelt sind.

19. Lichtvorhang nach einem der Ansprüche 1 bis 18, **dadurch gekennzeichnet, dass** dieser ein Sicherheits-Lichtvorhang ist.

20. Lichtvorhang nach Anspruch 19, **dadurch gekennzeichnet, dass** dieser eine redundante, fehlersichere Auswerteeinheit (8) aufweist.

## Claims

1. Light curtain for detecting objects in a surveillance area, having an arrangement of transmitters and receivers forming beam axes,
the transmitters and receivers of the beam axes being activatable individually or in succession to form a plurality of beam axes, and the light beams (3) of the transmitter of a beam axis being guided onto the receiver of this beam axis when the surveillance area is free,
and having an evaluation unit (8) in which an object detection signal is generated according to the received signals at the outputs of the receivers, the transmitters forming at least one transmitter cascade,
the transmitters being directly activatable individually or to a plurality of them by means of a first drive circuit without current-limiting resistor in their current path, and the transmission current being predetermined centrally and being adaptable individually for the individual transmitters,
and/or the receivers forming at least one receiver cascade, the receivers being activatable individually or to a plurality by means of a second drive circuit, **characterised in that**
the received signals are fed to a common group of amplifiers (10) without individual active pre-amplification, analog switches and/or impedance converters per receiver, each receiver being formed by a receiving diode (6) or a receiving transistor, the received signals of the receiving diode (6) or of the receiving transistor being fed via a decoupling diode (11) or a low-capacitance transistor to a signal line (9) which forms a common line and is guided by said line to the group of amplifiers (10).

2. Light curtain according to claim 1, **characterised in that** the second drive circuit has a shift register for activating the receivers
or an array of diode selection switches, each receiver being associated with a diode selection switch.

3. A light curtain according to one of claims 1 or 2, **characterised in that** the light curtain has a diode selector switch that instead of low-capacitance transistors, high-frequency field-effect transistors are used.

4. A light curtain according to one of claims 1 to 3, **characterised in that** a non-activated receiving diode (6) is switched into element mode by means of a leakage resistor (12) and an auxiliary voltage U_{H}, the auxiliary voltage U_{H} being selected in such a way that currents generated in the receiving diode (6) by the impingement of light beams (3) are diverted via the leakage resistor (12) and do not reach the group of amplifiers (10).

5. A light curtain according to claim 4, **characterised in that** an active receiving diode (6) is operated in blocking mode, and **in that** currents generated in the receiving diode (6) by the impingement of light beams (3) are registered in the group of amplifiers (10) without intermediate or pre-amplification or impedance conversion.

6. A light curtain according to one of claims 4 or 5, **characterised in that** each decoupling diode (11) is biased with the auxiliary voltage U_{H}.

7. A light curtain according to any of claims 1 to 6, **characterised in that** the signal line (9) is a controlled impedance line.

8. A light curtain according to claim 7, **characterised in that** error monitoring is realised by checking the operating point of the signal line (9) and/or a current measurement on the signal line (9) and/or the evaluation of the signal characteristics in the group of amplifiers (10).

9. A light curtain according to one of claims 1 to 8, **characterised in that** the group of amplifiers is arranged in the middle third of the receiver cascade.

10. A light curtain in accordance with one of claims 1 to 9, **characterised in that** a plurality of receiver cascades are coupled to one another.

11. A light curtain according to claim 10, **characterised in that** the receiver cascades are connected via a signal line (15) spanning cascade modules.

12. A light curtain according to one of claims 1 to 11, **characterised in that** the total number of receiving diodes (6) and/or the resolution of the light curtain can be determined and/or an error check of receiver cascades can be carried out by evaluating signal curves on the signal line (15) or the signal line (9) spanning cascade modules.

13. A light curtain according to one of claims 1 to 12, **characterised in that** each transmitter is formed by a transmitter diode (4), and **in that** the first drive circuit for driving the transmitter diode (4) has a shift register or an arrangement of diode selection switches, in which a diode selection switch is assigned to each transmitter diode (4).

14. A light curtain according to claim 13, **characterised in that**, as a component of the first drive circuit, each diode selection switch is assigned an actuator, in particular a transistor (18), the emitting diode (4) automatically having a current-limiting component in its current path is arranged in the source/emitter circuit of the actuator, and the sense current of the transmitter diode (4) can be adjusted via the gate or base voltage of the actuator.

15. A light curtain according to claim 14, **characterised in that** compensation of temperature fluctuations of the emitting diode (4) can be carried out by adjusting the emitting currents.

16. A light curtain according to one of the claims 13 to 15, **characterised in that** an error control of the transmitter diodes (4) can be carried out by a current measurement of the current supplied sequentially to the transmitter diodes (4).

17. A light curtain according to claim 16, **characterised in that** the results of the error control of the transmitter diodes (4) are transmitted to the receivers by means of the light beams (3) and are evaluated by the evaluation unit (8).

18. A light curtain in accordance with one of claims 1 to 17, **characterised in that** a plurality of transmitter cascades are coupled to one another.

19. A light curtain according to one of claims 1 to 18, **characterised in that** it is a safety light curtain.

20. A light curtain according to claim 19, **characterised in that** it has a redundant, failsafe evaluation unit (8).

## Revendications

1. Rideau lumineux pour la détection d'objets dans une zone de surveillance, comportant un agencement d'émetteurs et de récepteurs formant des axes de faisceau,
les émetteurs et récepteurs des axes de faisceau pouvant être activés individuellement ou successivement pour former une pluralité d'axes de faisceau, et les faisceaux lumineux (3) de l'émetteur d'un axe de faisceau étant guidés sur le récepteur de cet axe de faisceau lorsque la zone de surveillance est libre,
et comportant une unité d'évaluation (8) dans laquelle un signal de détection d'objet est généré en fonction des signaux reçus aux sorties des récepteurs, les émetteurs formant au moins une cascade d'émetteurs,
les émetteurs pouvant être activés directement individuellement ou à plusieurs d'entre eux au moyen d'un premier circuit de commande sans résistance de limitation de courant dans leur trajet de courant, et le courant de transmission étant prédéterminé de manière centrale et pouvant être conçu individuellement pour les émetteurs individuels,
et/ou les récepteurs formant au moins une cascade de récepteurs, les récepteurs pouvant être activés individuellement ou à plusieurs au moyen d'un second circuit de commande, **caractérisé en ce que**
les signaux reçus sont envoyés à un groupe commun d'amplificateurs (10) sans préamplification active individuelle, commutateurs analogiques et/ou convertisseurs d'impédance par récepteur, chaque récepteur étant formé par une diode de réception (6) ou un transistor de réception, les signaux reçus de la diode de réception (6) ou du transistor de réception étant envoyés par une diode de découplage (11) ou un transistor à faible capacité à une ligne de signaux (9) qui forme une ligne commune et est guidée par cette ligne au groupe d'amplificateurs (10).

2. Rideau lumineux selon la revendication 1, **caractérisé en ce que** le second circuit de commande comporte un registre à décalage pour l'activation des récepteurs est un ensemble de commutateurs de sélection de diodes, chaque récepteur étant associé à un commutateur de sélection de diodes.

3. Rideau lumineux selon l'une des revendications 1 ou 2, **caractérisé en ce que** le rideau lumineux comporte un sélecteur à diodes qui utilise des transistors à effet de champ à haute fréquence au lieu de transistors à faible capacité.

4. Rideau lumineux selon l'une des revendications 1 à 3, **caractérisé en ce qu'**une diode réceptrice (6) non activée est commutée en mode élément au moyen d'une résistance de fuite (12) et d'une tension auxiliaire U_{H}, la tension auxiliaire U_{H} étant sélectionnée de telle sorte que les courants générés dans la diode réceptrice (6) par l'impact des faisceaux lumineux (3) sont déviés via la résistance de fuite (12) et n'atteignent pas l'amplificateur (10).

5. Rideau lumineux selon la revendication 4, **caractérisé en ce qu'**une diode réceptrice active (6) fonctionne en mode de blocage et **en ce que** des courants générés dans la diode réceptrice (6) par l'impact de faisceaux lumineux (3) sont enregistrés dans le groupe d'amplificateurs (10) sans conversion intermédiaire, préamplification ou impédance.

6. Rideau lumineux selon l'une des revendications 4 ou 5, **caractérisé en ce que** chaque diode de découplage (11) est polarisée avec la tension auxiliaire U_{H}.

7. Rideau lumineux selon l'une quelconque des revendications 1 à 6, **caractérisé en ce que** la ligne de signaux (9) est une ligne à impédance commandée.

8. Rideau lumineux selon la revendication 7, **caractérisé en ce qu'**une surveillance d'erreur est réalisée en vérifiant le point de fonctionnement de la ligne de signaux (9) et/ou une mesure de courant sur la ligne de signaux (9) et/ou l'évaluation des caractéristiques du signal dans le groupe d'amplificateurs (10).

9. Rideau lumineux selon l'une des revendications 1 à 8, **caractérisé en ce que** le groupe d'amplificateurs est disposé dans le tiers médian de la cascade de receveurs.

10. Rideau de lumière selon l'une des revendications 1 à 9, **caractérisé en ce qu'**une pluralité de cascades de receveurs sont couplées les unes aux autres.

11. Rideau lumineux selon la revendication 10, **caractérisé en ce que** les cascades de receveurs sont connectées par l'intermédiaire d'une ligne de signaux (15) couvrant des modules en cascade.

12. Rideau lumineux selon l'une des revendications 1 à 11, **caractérisé en ce que** le nombre total de diodes de réception (6) et/ou la résolution du rideau lumineux peuvent être déterminés et/ou un contrôle d'erreur des cascades de receveurs peut être effectué en évaluant des courbes de signaux sur la ligne de signaux (15) ou la ligne de signaux (9) couvrant des modules en cascade.

13. Rideau lumineux selon l'une des revendications 1 à 12, **caractérisé en ce que** chaque émetteur est formé par une diode émettrice (4), et **en ce que** le premier circuit de commande pour commander la diode émettrice (4) comporte un registre à décalage ou un agencement de commutateurs de sélection de diode, dans lequel un commutateur de sélection de diode est associé à chaque diode émettrice (4).

14. Rideau lumineux selon la revendication 13, **caractérisé en ce que**, en tant que composant du premier circuit de commande, un actionneur, en particulier un transistor (18), est associé à chaque commutateur de sélection de diode, la diode émettrice (4) ayant automatiquement dans son trajet de courant une composante de limitation de courant est disposée dans le circuit source/émetteur de l'actionneur, et le courant détecté par la diode émettrice (4) peut être réglé via la tension de grille ou de base de l'actionneur.

15. Rideau lumineux selon la revendication 14, **caractérisé en ce que** la compensation des variations de température de la diode émettrice (4) peut être réalisée en réglant les courants d'émission.

16. Rideau lumineux selon l'une des revendications 13 à 15, **caractérisé en ce qu'**une commande d'erreur des diodes émettrices (4) peut être effectuée par une mesure du courant fourni séquentiellement aux diodes émettrices (4).

17. Rideau lumineux selon la revendication 16, **caractérisé en ce que** les résultats de la commande d'erreur des diodes émettrices (4) sont transmis aux récepteurs au moyen des faisceaux lumineux (3) et sont évalués par l'unité d'exploitation (8).

18. Rideau de lumière selon l'une des revendications 1 à 17, **caractérisé en ce qu'**une pluralité de cascades d'émetteurs sont couplées les unes aux autres.

19. Rideau lumineux selon l'une des revendications 1 à 18, **caractérisé en ce qu'**il s'agit d'un rideau lumineux de sécurité.

20. Rideau lumineux selon la revendication 19, **caractérisé en ce qu'**il présente une unité d'évaluation (8) redondante et à sécurité intégrée.
